# EUROPÄISCHE PATENTSCHRIFT

(11) **EP 4 184 731 B1**
(45) Veröffentlichungstag und Bekanntmachung des Hinweises auf die Patenterteilung: **29.10.2025**
(21) Anmeldenummer: 22197761.4
(22) Anmeldetag: 26.09.2022
(51) Int. Cl.: H02B 1/32, H02B 1/16

(54) **MONTAGEELEMENT FÜR DEN INNENAUSBAU EINES SCHALTSCHRANKGEHÄUSES UND EINE ENTSPRECHENDE SCHALTSCHRANKANORDNUNG**
MOUNTING ELEMENT FOR THE INTERIOR OF A SWITCHGEAR CABINET HOUSING AND A CORRESPONDING SWITCHGEAR CABINET ASSEMBLY
ELÉMENT DE MONTAGE POUR L'AMÉNAGEMENT INTÉRIEUR D'UN BOÎTIER D'ARMOIRE ÉLECTRIQUE ET AGENCEMENT D'ARMOIRE ÉLECTRIQUE CORRESPONDANT

(30) Priorität: 22.11.2021 DE 102021130484
(43) Veröffentlichungstag der Anmeldung: 24.05.2023
(73) Patentinhaber: Rittal GmbH & Co. KG, 35745 Herborn (DE)
(72) Erfinder: Wirbelauer, Sascha, 35781 Weilburg-Odersbach (DE); Neuhof, Markus, 35630 Ehringshausen-Niederlemp (DE)
(74) Vertreter: Angerhausen, Christoph

(56) Entgegenhaltungen:
- EP-A2- 1 965 626
- DE-A1- 102006 015 317
- DE-A1- 102008 052 291
- DE-A1- 102014 111 806
- DE-B3- 102011 119 277

## Beschreibung

Die Erfindung geht aus von einem Montageelement für den Innenausbau eines Schaltschrankgehäuses, wobei das Montageelement eine Montageschiene aufweist, die an einem ersten ihrer gegenüberliegenden Längsenden ein Spannelement und an dem zweiten Längsende ein Stützelement aufweist. Eine derartige Montageschiene ist aus der DE 10 2011 119 277 B3 bekannt.

Die DE 10 2008 052291 A1 beschreibt ein Montageelement, bei dem der Spannabschnitt U-förmig miteinander verbundene Flansche aufweist, zwischen denen ein Schraubenantrieb wirkt. Die EP 1 965 626 A1 beschreibt eine teleskopierbare Montageschiene mit Rastmitteln an ihren gegenüberliegenden Längsenden. Die DE 10 2006 015317 A1 offenbart eine Montageschiene, entlang welcher ein Befestigungsmittel variabel arretiert werden kann.

Die aus dem Stand der Technik bekannten Montageelemente weisen ein Spannelement auf, das nach dem Kniehebelprinzip gegenüber der Montageschiene verschwenkt wird, um das Montageelement in einem Schaltschrankgehäuse zu verspannen. Die Schwenkbewegung des Spannelements führt jedoch dazu, dass sich das Montageelement beim Verspannen zumindest geringfügig verlagert, was aufgrund der damit verbundenen Toleranzen den weiteren Innenausbau des Schaltschrankgehäuses erschwert. Das Kniehebelprinzip hat weiterhin den Nachteil, dass nur in sehr begrenztem Maße auf schaltschrankseitige Fertigungstoleranzen, insbesondere im Hinblick auf den Abstand zwischen den gegenüberliegenden Konturen des Schaltschrankgehäuses, zwischen welchen das Montageelement montiert werden soll, reagiert werden kann.

Es ist daher die Aufgabe der Erfindung, ein Montageelement der eingangs beschriebenen Art derart weiterzuentwickeln, dass es prozesssicher im Inneren eines Schaltschrankgehäuses verspannt werden kann und darüber hinaus auch dazu geeignet ist, auf schaltschrankseitige Fertigungstoleranzen zu reagieren.

Diese Aufgabe wird durch ein Montageelement mit den Merkmalen des Anspruchs 1 gelöst. Der nebengeordnete Anspruch 20 betrifft eine entsprechende Schaltschrankanordnung. Vorteilhafte Ausführungsformen sind Gegenstand der jeweils abhängigen Ansprüche.

Demgemäß ist bei einem Montageelement vorgesehen, dass das Spannelement in Bezug auf die Montageschiene über einen zwischen der Montageschiene und dem Spannelement wirkenden Antrieb in der Längsrichtung der Montageschiene verstellbar ist. Das Spannelement ist über eine Linearführung mit der Montageschiene verbunden. Die Linearführung kann auch allein durch den Antrieb bereitgestellt sein. Der Antrieb kann dazu beispielsweise als ein Gewindebolzen ausgebildet sein, der das Spannelement in der Längsrichtung in Bezug auf die Montageschiene antreibt.

Alternativ kann sich der Gewindebolzen unter einem spitzen Winkel zu der Längsrichtung erstrecken, wobei das Spannelement und die Montageschiene über eine Linearführung in der Längsrichtung zueinander geführt sind. Die Linearführung kann mindestens einen Führungsflansch aufweisen, der an einer sich in Längsrichtung erstreckenden Gleitfläche der Montageschiene abgestützt und in der Längsrichtung geführt ist. Die Montageschiene kann an ihrer Stirnseite, über die das Spannelement mit der Montageschiene gekoppelt ist, eine vorstehende Profilseite aufweisen, über die die Montageschiene auf dem Spannelement abgestützt und in der Längsrichtung geführt ist.

Durch die Längsverstellbarkeit kann einerseits auf Toleranzen hinsichtlich des lichten Einbaumaßes zwischen den gegenüberliegenden Konturen des Schaltschrankgehäuses, zwischen welchen das Montageelement montiert werden soll, flexibel reagiert werden. Andererseits wird durch die Verstellbarkeit in Längsrichtung sichergestellt, dass das Montageelement im Zuge des Verspannens kein Kippen oder sonstiges Verlagern in einer Richtung senkrecht zur Längsrichtung der Montageschiene erfährt.

Der Antrieb kann zwischen einer Stirnseite der Montageschiene an dem ersten Längsende und einem Betätigungsflansch des Spannelements wirken. Die Montageschiene kann demgemäß eine Stirnseite aufweisen, welche als montageschienenseitiges Stützlager für den Antrieb dient, beziehungsweise an welcher das Spannelement über den Antrieb abgestützt ist. Dadurch wird erreicht, dass die Montagescheine im Wesentlichen über ihre gesamte Länge überbaubar ist, da weder das Spannelement noch der Antrieb die Montageschiene überbauen oder verdecken.

Das Spannelement kann mit dem Betätigungsflansch im Innern der Montageschiene angeordnet sein und mit einem mit dem Betätigungsflansch verbundenen Schieber über die Stirnseite aus der Montagescheine herausragen. Auch bei dieser Ausführungsform ist sichergestellt, dass das Spannelement nicht die Überbaubarkeit der Montageschiene beeinträchtigt. Der Schieber kann für die Aufnahme einer Spannkraft geeignete Federkonstante oder Federelastizität aufweisen. Dazu kann bei einer Ausführungsform der Schieber eine starre Schieberplatte aufweisen, auf deren von der Montageschiene abgewandten Kante ein Federelement für die Aufnahme der Spannkraft aufgesteckt ist, wozu das Federelement eine geeignete Federkonstante oder Federelastizität aufweist.

Der Antrieb kann ein Schraubantrieb sein, der sich mit mindestens einem Gewindebolzen durch die Stirnseite der Montageschiene an dem ersten Längsende der Montageschiene hindurcherstreckt. Bei dieser Ausführungsform wird ebenfalls sichergestellt, dass der Antrieb nicht die Überbaubarkeit der Montageschiene beeinträchtigt. Vorzugsweise weist der Schraubantrieb zwei unabhängig voneinander antreibbare Gewindebolzen auf, ein einziger Gewindebolzen kann jedoch ausreichend sein.

Das Spannelement und Stützelement können identisch ausgebildet sein, sodass die Montageschiene hinsichtlich ihrer Ausrichtung in Bezug auf das Schaltschrankgehäuse flexibel montiert werden kann. Alternativ kann das Stützelement nach Art des aus der DE 10 2011 119 277 B3 oder der DE 10 2014 111 806 A1 bekannten Stützelements ausgebildet sein.

Die Montagescheine kann an der Stirnseite eine Profilseite mit mindestens einem gewindelosen Durchbruch für den Gewindebolzen aufweisen und an einer dem Innern der Montageschiene zugewandten Innenseite der Profilseite kann ein Betätigungsflansch des Spannelements mit einem mit dem Durchbruch fluchtenden Innengewinde für den jeweiligen Bolzen angeordnet sein.

Die Profilseite mit dem gewindelosen Durchbruch und der Betätigungsflansch mit dem Innengewinde können sich parallel zueinander erstrecken.

Die Profilseite mit dem gewindelosen Durchbruch und der Betätigungsflansch mit dem Innengewinde können sich unter einem stumpfen Winkel zu einer sich parallel zur Längsrichtung erstreckenden Verbindungsprofilseite der Montagescheine erstrecken. Dabei kann die Verbindungsprofilseite zwei zueinander parallele weitere Profilseiten der Montagescheine, die sich ebenfalls parallel zur Längsrichtung der Montagescheine und weiterhin senkrecht zu der Verbindungsprofilseite erstrecken, miteinander verbinden. Durch die Einhaltung des stumpfen Winkels wird sichergestellt, dass der Antrieb, beispielsweise ein Gewindebolzen des Antriebs sowie ein komplementäres Innengewinde, auch dann prozesssicher betätigt werden kann, beispielsweise mit einem an einem Schraubenkopf angreifenden Schraubendreher, wenn das Montageelement außerhalb des lichten Öffnungsmaßes eines Schaltschrankgehäuses positioniert ist, beispielsweise zwischen der Rückwand des Schaltschrankgehäuses und einer eine Türöffnung des Schaltschranks begrenzenden Profilierung des Schaltschranks.

Das Spannelement kann in der Längsrichtung der Montageschiene am Innenumfang und/oder am Außenumfang der Montageschiene geführt sein. Grundsätzlich können das Spannelement und die Montageschiene lediglich über den Antrieb, beispielsweise über einen Gewindebolzen, der durch die Montageschiene hindurchgeführt und in eine spannelementseitige Gewindeaufnahme eingeschraubt ist, geführt und miteinander verbunden sein. Das Spannelement und die Montageschiene können dabei linear zueinander geführt sein und dazu über komplementäre Gleichflächen, entlang welcher sie in Längsrichtung der Montagescheine zueinander feststellbar sind, miteinander im Formschluss stehen.

Das Spannelement kann in der Längsrichtung der Montageschiene entlang einer im Querschnitt senkrecht zur Längsrichtung C-förmigen oder U-förmigen Kontur am Innenumfang oder am Außenumfang der Montageschiene geführt und abgestützt sein. Dazu kann die Montageschiene für die Umsetzung der C-förmigen oder U-förmigen Kontur vorzugsweise eine sich parallel zur Längsrichtung erstreckende, vorzugsweise ebene Verbindungsprofilseite als Montageebene für Schaltschrankeinbauten oder Montagechassis und dergleichen aufweisen, wobei die Verbindungsprofilseite zwei zueinander parallele weitere Profilseiten der Montageschiene, die sich ebenfalls parallel zur Längsrichtung und senkrecht zur Verwendungsprofilseite erstrecken können, miteinander verbindet. Die Verbindungsprofilseite und/oder die weiteren Profilseiten können eine Systemlochung aus regelmäßig beanstandeten und geformten Durchbrüchen für die Aufnahme von üblichen Befestigungsmitteln aus dem Schaltanlagen- und Steuerungsbau aufweisen.

Das Spannelement kann mindestens einen sich parallel zur Längsrichtung der Montageschiene erstreckenden Führungsflansch aufweisen, über den das Spannelement am Innenumfang der Montageschiene geführt und abgestützt ist.

Der Führungsflansch kann an der Innenseite einer sich parallel zur Längsrichtung erstreckenden Verbindungsprofilseite der Montageschiene abgestützt sein, die zwei zueinander parallele weitere Profilseiten der Montageschiene, die sich parallel zur Längsrichtung und senkrecht zur Verbindungsprofilseite erstrecken, miteinander verbindet.

Der Führungsflansch kann an einem von der Stirnseite des das Spannelement aufweisenden Längsendes der Montageschiene abgewandten Ende des Spannelements angeordnet sein. Dabei kann der Führungsflansch vorzugsweise angrenzend an und unter einem Winkel von mehr als 90° sowie weniger als 180° zu einem Betätigungsflansch des Spannelements ausgebildet sein. Die Montageschiene kann an der Stirnseite eine vorstehende Profilseite aufweisen, mit der die Montageschiene auf einem Schieber des Spannelements abgestützt ist. Mit dem Schieber kann das Spannelement über die Stirnseite aus der Montageschiene herausragen und über die Stirnseite vorstehen.

Vorzugsweise ist die Montageschiene mit einer vorstehenden Profilseite auf dem Schieber des Spannelements und das Spannelement mit einem Führungsflansch an der Innenseite der Verbindungsprofilseite der Montageschiene abgestützt.

Das Spannelement und/oder das Stützelement kann an seinem von einer Stirnseite der Montageschiene abgewandten freien Ende ein Federelement aufweisen, das vorzugsweise eine Federsteifigkeit aufweist, die zumindest kleiner als eine Federsteifigkeit übriger Bestandteile des Spannelements und/oder eine Federsteifigkeit der Montageschiene ist. Das Federelement kann beispielsweise eine kleinere Federsteifigkeit als ein Schieber des Spannelements aufweisen, mit dem das Spannelement aus der Montageschiene herausragt und über die Stirnseite der Montageseite vorsteht. Das Federelement kann an dem Schieber im Reibschluss oder anderweitig befestigt sein.

Das Federelement und das übrige Spannelement und/oder das übrige Stützelement können als Blechformteile ausgebildet sein. Dabei kann eine Blechdicke des Federelements geringer als eine Blechdicke des übrigen Spannelements und/oder des übrigen Stützelements sein.

Das Federelement kann lösbar auf einem von der Stirnseite abgewandten freien Ende des Spannelements und/oder des Stützelements befestigt sein. Vorzugsweise kann das Federelement an einem Schieber des Spannelements befestigt sein, mit dem das Spannelement über die Stirnseite aus der Montageschiene herausragt. Das Federelement kann im Form- und/oder Reibschluss auf dem freien Ende des Spannelements, insbesondere auf einem Schieber des Spannelements, lösbar und damit auswechselbar montiert sein.

Das Federelement kann an seinem von der Stirnseite abgewandten Ende mindestens eine in der Längsrichtung vorstehende Kontaktkralle aufweisen. Vorzugsweise ist das gesamte Montageelement aus elektrisch leitfähigem Material, insbesondere aus einem elektrisch leitfähigen Stahlblech hergestellt. Über die Kontaktkrallen kann ein Potenzialausgleich zwischen dem gegebenenfalls lackierten Schaltschrankgehäuse und dem Montageelement hergestellt werden. Üblicherweise wird im Anwendungsfall das Schaltschrankgehäuse auf Masse gelegt. Mit dem Verspannen des Spannelements gegenüber der Montageschiene kann sich die Kontaktkralle durch die Lackschicht des Schaltschrankgehäuses eingraben und das unter dem Lack liegende Metall des Schaltschrankgehäuses elektrisch kontaktieren.

Das Federelement kann ein Blechformteil sein, dass an seinem von der Stirnseite abgewandten Ende eine in der Längsrichtung federelastische Blechlasche mit mindestens einer Kerbe oder Ausnehmung für die Aufnahme einer Positioniernoppe eines Schaltschrankgehäuses mit Noppenprägung aufweist. Dabei kann die Blechlasche vorzugsweise weiterhin mindestens eine in der Längsrichtung vorstehende Kontaktralle aufweisen. Ein derartiges Schaltschrankgehäuse mit einer Noppenprägung ist in der DE 10 2014 111 896 A1 beschrieben.

Das Federelement kann dazu eingerichtet sein, sämtliche bei dem Verspannen des Montageelements im Schaltschrankinnern auftretende elastische Verformung zur Bereitstellung der erforderlichen Klemmkraft aufzunehmen. Damit kann eine mechanische Überbelastung der Montageschiene durch das Verspannen am Gehäuse wirkungsvoll vermieden werden. Dazu kann das Federelement, insbesondere die bereits beschriebene, wesentlich geringere Federsteifigkeit im Vergleich zu der Montageschiene und übrigen Bestandteilen des Spannelements und des Stützelements aufweisen. Beispielsweise kann das Federelement mit einer im Vergleich zu den übrigen Bestandteilen des Montageelements wesentlich dünneren Blechstärke ausgebildet sein.

Beispielsweise kann das Federelement, wenn es ein Blechformteil ist, an den gegenüberliegenden Seiten jeweils eine U-förmige Umkantung aufweisen, die an Ihrem von der Stirnseite abgewandten Ende mindestens eine in der Längsrichtung vorstehende weitere Kontaktkralle aufweist.

Aufgrund der U-förmigen Ausbildung der Umkantung kann die daran ausgebildete weitere Kontaktkralle eine Steifigkeit beziehungsweise Positionsfestigkeit aufweisen, die größer als die Steifigkeit und/oder Positionsfestigkeit einer in Längsrichtung vorstehenden Kontaktkralle, die an einer federelastischen Blechlasche des Federelements der zuvor beschriebenen Art ausgebildet ist. Die Kontaktkralle an der federelastischen Blechlasche kann somit im unbelasteten Zustand des Federelements weiter in der Längsrichtung vorstehen als die weitere Kontaktkralle an der U-förmigen Umkantung. Die Kontaktkralle an der federelastischen Blechlasche kann als Positionierhilfe des Montageelements im Schaltschrankgehäuse dienen, derart, dass bereits im unverspannten Zustand des Spannelements das Federelement durch manuelle elastische Verformung beim Einsetzen in das Schaltschrankgehäuse eine erste Andruckkraft bereitstellt, wobei sich die federelastische Blechlasche über ihre Kontaktkralle an dem Schaltschrankgehäuse abstützt.

Gemäß einem anderen Aspekt der Erfindung wird eine Schaltschrankanordnung beschrieben, die mindestens ein Montageelement der zuvor beschriebenen Art in einem Schaltschrankgehäuse aufweist. Dabei erstreckt sich das Montageelement im Innern des Schaltschrankgehäuses entlang einer Außenwand des Schaltschrankgehäuses und ist in dieser Position in dem Schaltschrankgehäuse montiert. Das Montageelement kann zwischen einer Rückwand des Schaltschrankgehäuses und einer eine Türöffnung begrenzenden Profilierung des Schaltschrankgehäuses montiert sein, wobei das Montageelement über das Stützelement an der Rückwand abgestützt und über das Spannelement an der Profilierung verspannt werden kann.

Indem das Montageelement in der zuvor beschriebenen Art, gegebenenfalls unter zumindest anteiliger Vorspannung der federelastischen Blechlasche des Federelements zwischen der Rückwand und der die Türöffnung begrenzenden Profilierung positioniert worden ist, gegebenenfalls unter weiterer Zuhilfenahme einer Noppenprägung am Schaltschrankgehäuse, die ihn entsprechende Ausnehmungen an der Blechlasche des Federelements eingreifen, kann durch Betätigen des Antriebs, beispielsweise durch Einschrauben eines Schraubbolzens über die Stirnseite in das Montageelement eine Verspannung des Montageelements in Bezug auf das Schaltschrankgehäuse erreicht werden.

Weitere Einzelheiten der Erfindung werden anhand der nachstehenden Figuren erläutert. Dabei zeigt:
- Figur 1: in perspektivischer Darstellung eine beispielhafte Ausführungsform eines erfindungsgemäßen Montageelements;
- Figur 2: eine Detailansicht des ersten Endes mit Stützabschnitt gemäß der Ausführungsform nach Figur 1 in explodierter Darstellung;
- Figur 3: einen Längsquerschnitt des ersten Endes mit Stützabschnitt der Ausführungsform gemäß Figur 1;
- Figur 4: eine beispielhafte Ausführungsform einer Schaltschrankanordnung in perspektivischer Darstellung; und
- Figur 5: die Schaltschrankanordnung gemäß Figur 4 im Querschnitt.

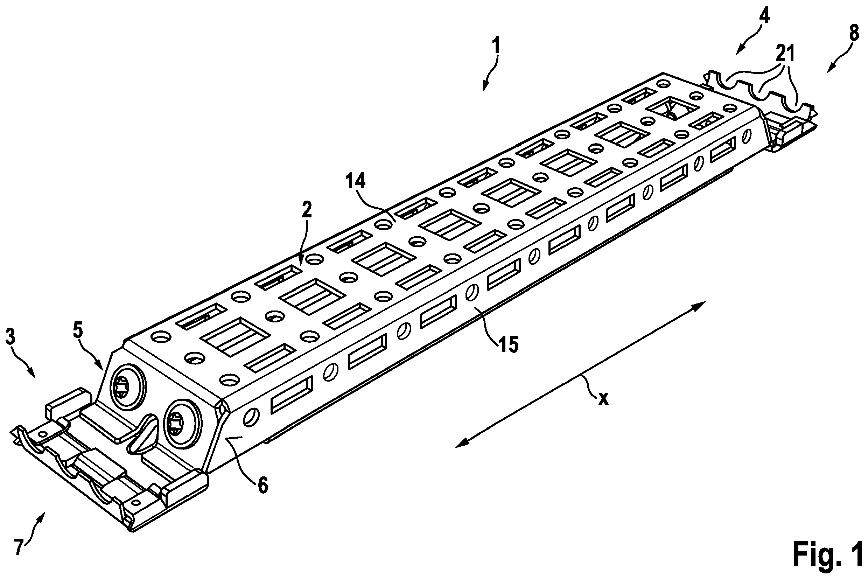

Die Figur 1 zeigt eine beispielshafte Ausführungsform eines Montageelements 1 für den Innenausbau eines Schaltschrankgehäuses. Das Montageelement 1 besteht im Wesentlichen aus einer Montageschiene 2, die an ihren gegenüberliegenden Längsenden 7, 8 ein Spannelement 3 beziehungsweise ein Stützelement 4 aufweist. Das Spannelement 3 und Stützelement 4 können identisch ausgebildet sein, sodass die Montageschiene 1 hinsichtlich ihrer Ausrichtung in Bezug auf das Schaltschrankgehäuse flexibel montiert werden kann. Alternativ kann das Stützelement 4 auch nach Art des aus der DE 10 2011 119 277 B3 oder der DE 10 2014 111 896 A1 bekannten Stützelements ausgebildet sein.

Es ist zu erkennen, dass das Stützelement 4 und das Spannelement 3 die Montagescheine 2 nicht überbauen oder anderweitig beeinträchtigen, sodass die Montageschiene 2 über ihre gesamte Länge für die Befestigung von Komponenten und für den Innenausbau verwendet werden kann. Insbesondere wird das Spannelement 3 lediglich über die Stirnseite 6 der Montageschiene 2 angebunden. Auch der Antrieb 5, mithilfe welches das Spannelement 3 in Bezug auf die Montageschiene 2 in der Längsrichtung x der Montageschiene 2 verstellbar ist, wirkt lediglich auf die Stirnseite 6 der Montageschiene 2.

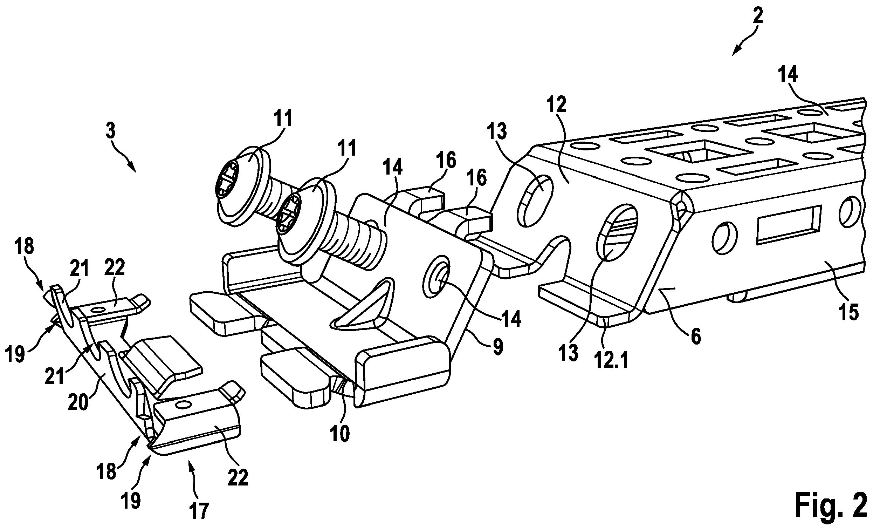

Die Explosionsdarstellung gemäß Figur 2 zeigt, dass die Montageschiene 2 an ihrer Stirnseite 6 von einer Profilseite 12 verschlossen ist. Die Profilseite 12 weist Durchbrüche 13 für zwei Schraubbolzen 11 1auf. Die Durchbrüche 13 weisen kein Gewinde auf, sodass die Schraubbolzen 11 die Durchbrüche 13 widerstandslos passieren können. Die Profilseite 12 ist über zwei vorstehende Profilseiten 12.1 auf dem Spannelement 3 abgestützt, wenn das Spannelement 3 in der in Figur 1 gezeigten Montageposition angeordnet ist. In der Montageposition ist das Spannelement 3 mit seinem Betätigungsflansch 9 im Innern der Montageschiene 2 angeordnet, d.h. in dem von den Verbindungsprofilseite 14 und den beiden weiteren Profilseiten 15 der Montageschiene 2 umschlossenen Raum, wobei das Spannelement 3 mit einem mit dem Betätigungsflansch 9 verbundenen Schieber 10 über die Stirnseite 6 aus der Montageschiene 2 herausragt.

Die Montageschiene 2 weist an der Stirnseite 6 eine vorstehende Profilseite 12 auf, mit der die Montageschiene 2 auf dem Schieber 10 des Spannelements 3 abgestützt ist. Genauer sind die vorliegend zwei (eine wäre ausreichend) vorstehenden und sich parallel zur Längsrichtung x der Montageschiene 2 erstreckenden Profilseiten 12.1 der Profilseite 12 auf dem Schieber 10 abgestützt. Das Spannelement 3 ist mit mindestens einem, vorliegend zwei, sich parallel zur Längsrichtung x der Montageschiene 2 erstreckenden Führungsflansch 16 am Innenumfang der Montageschiene 2 geführt und abgestützt.

An einer von der Montageschiene 2 abgewandten, endseitigen Kante des Schiebers 10, die sich senkrecht zur Längsrichtung x erstreckt, ist ein Federelement 17 reibschlüssig aufgesteckt. Das Federelement 17 weist eine geringere Federsteifigkeit im Vergleich zu den übrigen Komponenten des Montageelements 1 auf. Insbesondere weist das Federelement 17 eine geringere Federsteifigkeit als die Montageschiene 2 und die übrigen Bestandteile des Spannelements 3 auf, insbesondere als die vorliegend einteilig ausgeführten Bestandteile Betätigungsflansch 9 und Schieber 10. Dazu kann das Federelement 17 aus einem im Vergleich zu der Montageschiene 2 und den übrigen Komponenten des Spannelements 3 dünneren Blech gebildet sein. Wie dargestellt ist das Montageelement, insbesondere die Montageschiene 2 und das Spannelemente 3, weitestgehend als Blechformteile ausgebildet, sodass die zuvor beschriebene Einstellung der Federsteifigkeit beispielsweise durch die Wahl einer im Vergleich geringeren Blechdicke für die Ausbildung des Federelement 17 erreicht werden kann.

Das Federelement 17 weist an seinem von der Montageschiene 2 abgewandten Ende eine Blechlasche 20 auf, über welche das Federelement 17 mit einem Schaltschrankgehäuse in Kontakt tritt. Für die elektrische Kontaktierung, insbesondere zwecks Potenzialausgleich, weist die Blechlasche 20 mindestens eine Kontaktkralle 18 auf. Die Blechlasche 20 ist über eine Abkantung an einem freien Ende des Federelements 17 ausgebildet, sodass die Blechlasche einschließlich der Kontaktkralle 18 federelastisch ist. Des Weiteren weist das Federelement 17 an gegenüberliegenden äußeren U-Umkantungen jeweils eine in der x-Richtung und von der Montageschiene 2 abgewandt vorstehende weitere Kontaktkrallen 19 auf.

Die Federelastizität des Federelement 17, insbesondere der endseitigen Blechlasche 20 kann so eingestellt sein, dass das Federelement 17 eine für die vor Positionierung des Montageelements 1 am Schaltschrankgehäuse ausreichende Spannkraft aufweist, welche das Federelement 17 bei dem Einsetzen des Montageelements 1 in das Schaltschrankgehäuse bereitstellt. Die Blechlasche 20 kann Ausnehmungen 22 oder Kerben aufweisen, welche zur Aufnahme von Noppen einer Noppenprägung am Schaltschrankgehäuse dienen. Dieses Konzept ist grundsätzlich aus der DE 10 2014 111 896 A1 bekannt.

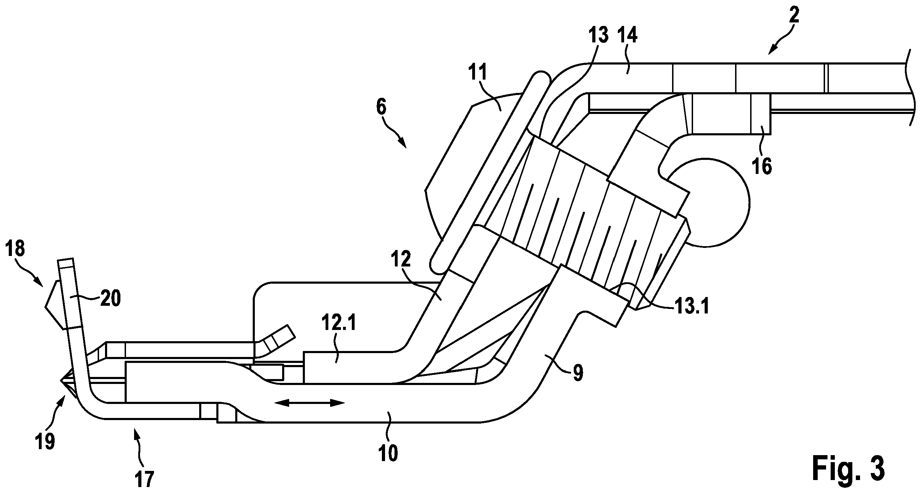

Die Figur 3 zeigt das Spannelement 3 in seinem an der Montageschiene 2 montierten Zustand, bei dem, wie mit Bezug auf Figur 2 bereits angedeutet wurde, das Spannelement 3, insbesondere ein Betätigungsflansch 9 des Spannelements 3 mit seinem horizontalen bzw. parallel zur Längsrichtung x verlaufenden Führungsflansch 16 an der Innenseite bzw. Unterseite der Verbindungprofilseite 14 in der Längsrichtung x verschieblich anliegt. Im Gegenzug ist die Montageschiene 2 mit seiner in Verstellrichtung x vorstehenden Profilseite 12.1 auf einem Schieber 10 des Spannelements 3 abgestützt. Der Durchbruch 13 in der Profilseite 12 der Montageschiene 2 fluchtet mit einem Innengewinde 13.1 des Betätigungsflanschs 9 des Spannelements 3. Der Betätigungsflanschs 9 und die Profilseite 12 erstrecken sich parallel zueinander und unter einem stumpfen Winkel zu der Verbindungprofilseite 14 und dem Schieber 10. Dadurch wird erreicht, dass bei in dem Schaltschrankgehäuse entlang einer Innenseite einer Außenwand des Schaltschrankgehäuses montiertem Montageelement 1, bei dem die Stirnseite 6 des Montageelements 1 von einer Kontur des Schaltschrankgehäuses, beispielsweise von einer Profilierung an einer Türöffnung des Schaltschrankgehäuses verdeckt sein kann, ein Werkzeug für den Antrieb des Gewindebolzens 11 an der Profilierung vorbei mit dem Gewindebolzen 11 in Eingriff gebracht werden kann.

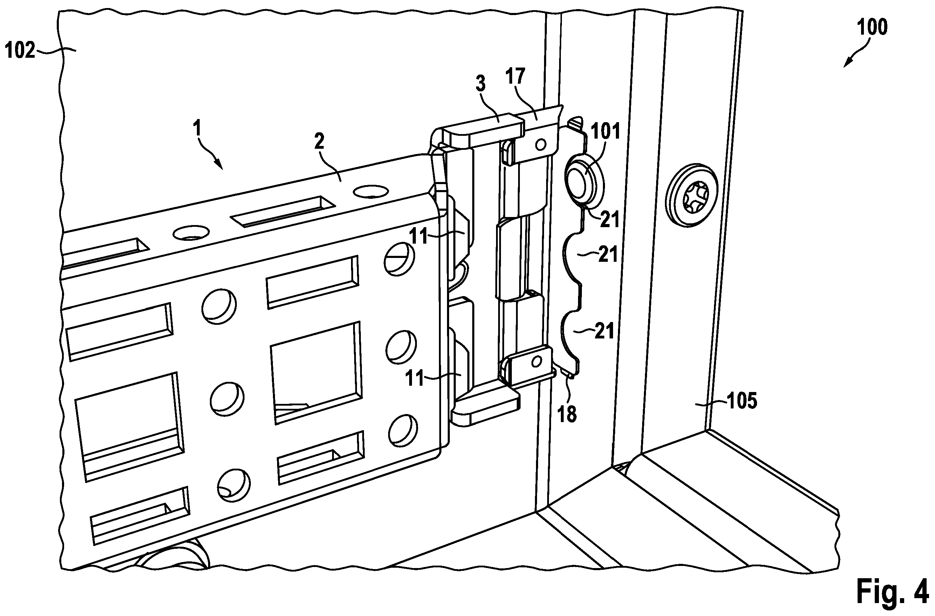

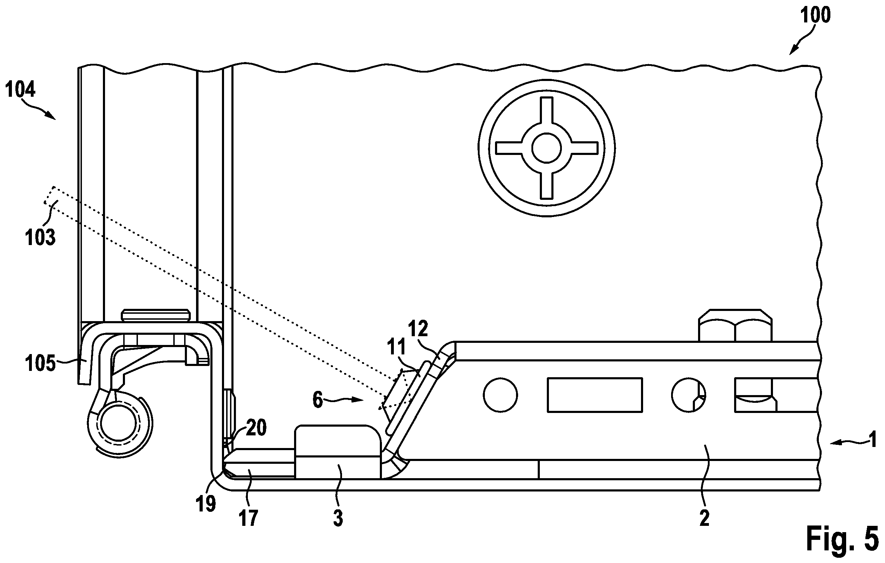

Die Figuren 4 und 5 zeigen den Anwendungsfall eines erfindungsgemäßen Montageelements 1, bei dem das Montageelement 1 zwischen einer eine Türöffnung 104 begrenzenden Profilierung 105 eines Schaltschrankgehäuses 100 und einer nicht dargestellten Rückwand des Schaltschrankgehäuses 100 montiert ist. Während der nicht dargestellte Stützabschnitt des Montageelements 1 an der Rückwand anliegt und gegebenenfalls analog zu dem Spannelement 3 mit einer Noppenprägung der Rückwand im Eingriff steht, ist das Spannelement 3 an der türseitigen Profilierung 105 zugewandt und daran anliegend montiert. Es ist zu erkennen, dass das Montageelement 2 zumindest weitestgehend außerhalb eines lichten Öffnungsmaßes der Türöffnung 104 angeordnet ist, mithin die Stirnseite 6 des Montageelements 1 von der Profilierung 105 verdeckt ist. Die Zugänglichkeit des Gewindebolzens 11 wird durch die bereits mit Bezug auf Figur 3 beschriebene Anwinkelung der Profilseite 12 erreicht.

Dies ist in Figur 5 veranschaulicht. Durch die Einhaltung eines stumpfen Winkels zwischen der Profilseite 12 der Montageschiene 2 und sowohl dem Schieber 10 (siehe Figur 3) als auch der Verbindungsprofilseite 14 kann ein Gewindebolzen 11 mit einem Werkzeug, vorliegend mit einem Schraubendreher 103, in Eingriff gebracht werden, obwohl die Stirnseite 6 der Montageschiene 2 außerhalb des lichten Öffnungsmaßes der Türöffnung 104 angeordnet ist. Die Stirnseite 6 liegt in der Flucht der Profilierung 105. Da die Montageschiene 1 außerhalb des lichten Öffnungsmaßes der Türöffnung 104 positioniert werden kann, stellt sie beim Innenausbau des Schaltschrankgehäuses 100 keine Störkontur dar. Beispielsweise wird die Montage einer Montageplatte im Innern des Schaltschrankgehäuses, welche Abmessungen aufweisen kann, die dem Öffnungsquerschnitt der Türöffnung 104 nahekommen, nicht behindert.

In der Zusammenschau der Figuren 4 und 5 ist weiterhin zu erkennen, dass mit dem Verspannen des Spannelements 3, mithin mit dem Einschrauben der Gewindebolzen 11 in das Spannelement 3, zunächst die Blechlasche 20 mit ihren zugeordneten Kontaktkrallen 18 an der Profilierung 105 flächig zur Anlage kommt, und dabei die Kontaktkrallen 18 in die Profilierung 105 bzw. eine Lackierung der Profilierung 105 eingetrieben werden. Dabei wird die Blechlasche 20 aus einer angewinkelten Position, bei der sie mit ihrer freien Kante von dem Montageprofil 2 weg ragt, in die in Figur 5 zu erkennende, aufrechte Position vorgespannt, sodass schließlich auch die weitere Kontaktkrallen 19 an der U-förmigen Umkantung 22 mit der Profilierung 105 in Kontakt tritt und analog zu der Kontaktkralle 18 durch eine eventuell vorhandene Lackierung des Schaltschrankgehäuses 100 hindurch in elektrischen Kontakt mit dem Metall des Schaltschrankgehäuses 100 tritt.

### Bezugszeichenliste:

- 1: Montageelement
- 2: Montageschiene
- 3: Spannelement
- 4: Stützelement
- 5: Antrieb
- 6: Stirnseite
- 7: erstes Längsende
- 8: zweites Längsende
- 9: Betätigungsflansch
- 10: Schieber
- 11: Gewindebolzen
- 12: Profilseite
- 12.1: vorstehende Profilseite
- 13: Durchbruch
- 13.1: Innengewinde
- 14: Verbindungsprofilseite
- 15: weitere Profilseite
- 16: Führungsflansch
- 17: Federelement
- 18: Kontaktkralle
- 19: weitere Kontaktkralle
- 20: Blechlasche
- 21: Ausnehmung
- 22: U-förmige Umkantung
- 100: Schaltschrankgehäuse
- 101: Positioniermappe
- 102: Außenwand
- 103: Schraubendreher
- 104: Türöffnung
- 105: Profilierung
- x: Längsrichtung

## Patentansprüche

1. Montageelement (1) für den Innenausbau eines Schaltschrankgehäuses (100), wobei das Montageelement (1) eine Montageschiene (2) aufweist, die an einem ersten ihrer gegenüberliegenden Längsenden (7) ein Spannelement (3) und an dem zweiten Längsende (8) ein Stützelement (4) aufweist, **dadurch gekennzeichnet, dass** das Spannelement (3) über eine Linearführung mit der Montageschiene (2) verbunden und in Bezug auf die Montageschiene (2) über einen zwischen der Montageschiene (2) und dem Spannelement (3) wirkenden Antrieb (5) in der Längsrichtung (x) der Montageschiene (2) verstellbar ist.

2. Montageelement (1) nach Anspruch 1, bei dem der Antrieb (5) zwischen einer Stirnseite (6) der Montageschiene (2) an dem ersten Längsende (7) und einem Betätigungsflansch (9) des Spannelements (3) wirkt.

3. Montageelement (1) nach Anspruch 2, bei dem das Spannelement (3) mit dem Betätigungsflansch (9) im Innern der Montageschiene (2) angeordnet ist und mit einem mit dem Betätigungsflansch (9) verbundenen Schieber (10) über die Stirnseite (6) aus der Montageschiene (2) herausragt.

4. Montageelement (1) nach einem der vorangegangenen Ansprüche, bei dem der Antrieb (5) ein Schraubantrieb ist, der sich mit einem Gewindebolzen (11) durch eine Stirnseite (6) der Montageschiene (2) an dem ersten Längsende (7) hindurch erstreckt.

5. Montageelement (1) nach Anspruch 4, bei dem die Montageschiene (2) an der Stirnseite (6) eine Profilseite (12) mit mindestens einem gewindelosen Durchbruch (13) für den Gewindebolzen (11) aufweist, wobei an einer dem Innern der Montageschiene (2) zugewandten Innenseite der Profilseite (12) ein Betätigungsflansch (9) des Spannelements (3) mit einem mit dem Durchbruch (13) fluchtenden Innengewinde (13.1) für den Gewindebolzen (11) angeordnet ist.

6. Montageelement (1) nach Anspruch 5, bei dem sich die Profilseite (12) mit dem gewindelosen Durchbruch (13) und der Betätigungsflansch (9) mit dem Innengewinde (13.1) parallel zueinander erstrecken.

7. Montageelement (1) nach Anspruch 5 oder 6, bei dem sich die Profilseite (12) mit dem gewindelosen Durchbruch (13) und der Betätigungsflansch (9) mit dem Innengewinde (13.1) unter einem stumpfen Winkel zu einer sich parallel zur Längsrichtung (x) erstreckenden Verbindungsprofilseite (14) der Montageschiene (2) erstrecken, die zwei zueinander parallele weitere Profilseiten (15) der Montageschiene (2), die sich ebenfalls parallel zur Längsrichtung (x) und senkrecht zur Verbindungsprofilseite (14) erstrecken, miteinander verbindet.

8. Montageelement (1) nach einem der vorangegangenen Ansprüche, bei dem das Spannelement (3) in der Längsrichtung (x) der Montageschiene (2) am Innenumfang und/oder am Außenumfang der Montageschiene (2) geführt ist.

9. Montageelement (1) nach Anspruch 8, bei dem das Spannelement (3) in der Längsrichtung (x) der Montageschiene (2) entlang einer im Querschnitt senkrecht zur Längsrichtung (x) C-förmigen oder U-förmigen Kontur am Innenumfang und/oder am Außenumfang der Montageschiene (2) geführt und abgestützt ist, wozu die Montageschiene (2) als C-förmige oder U-förmige Kontur vorzugsweise eine sich parallel zur Längsrichtung (x) erstreckende Verbindungsprofilseite (14) aufweist, die zwei zueinander parallele weitere Profilseiten (15) der Montageschiene (2), die sich ebenfalls parallel zur Längsrichtung (x) und senkrecht zur Verbindungsprofilseite (14) erstrecken, miteinander verbindet.

10. Montageelement (1) nach Anspruch 8 oder 9, bei dem das Spannelement (3) mindestens einen sich parallel zur Längsrichtung (x) der Montageschiene (2) erstreckenden Führungsflansch (16) aufweist, über den das Spannelement (3) am Innenumfang der Montageschiene (2) geführt und abgestützt ist.

11. Montageelement (1) nach Anspruch 10, bei dem der Führungsflansch (16) an der Innenseite einer sich parallel zur Längsrichtung (x) erstreckenden Verbindungsprofilseite (14) der Montageschiene (2) abgestützt ist, die zwei zueinander parallele weitere Profilseiten (15) der Montageschiene (2), die sich parallel zur Längsrichtung (x) und senkrecht zur Verbindungsprofilseite (14) erstrecken, miteinander verbindet.

12. Montageelement (1) nach Anspruch 10 oder 11, bei dem der Führungsflansch (16) an einem von der Stirnseite (6) des das Spannelement (3) aufweisenden Längendes der Montageschiene (2) abgewandten Ende des Spannelements (3) angeordnet ist, wobei der Führungsflansch (16) vorzugsweise angrenzend an und unter einem Winkel von mehr als 90° sowie weniger als 180° zu einem Betätigungsflansch (9) des Spannelements (3) ausgebildet ist.

13. Montageelement (1) nach einem der Ansprüche 7 bis 11, bei dem die Montageschiene (2) an der Stirnseite (6) eine vorstehende Profilseite (12.1) aufweist, mit der die Montageschiene (2) auf einem Schieber (10) des Spannelements (3) abgestützt ist, mit dem das Spannelement (3) über die Stirnseite (6) aus der Montageschiene (2) herausragt.

14. Montageelement (1) nach einem der vorangegangenen Ansprüche, bei dem das Spannelement (3) und/oder das Stützelement (4) an seinem von einer Stirnseite (6) der Montageschiene (2) abgewandten freien Ende ein Federelement (17) aufweist, das vorzugsweise eine Federsteifigkeit aufweist, die zumindest kleiner als eine Federsteifigkeit übriger Bestandteile des Spannelements (3) und/oder eine Federsteifigkeit der Montageschiene (2) ist.

15. Montageelement (1) nach Anspruch 14, bei dem das Federelement (17) und das übrige Spannelement (3) und/oder das übrige Stützelement (4) Blechformteile sind, wobei eine Blechdicke des Federelements (17) geringer als eine Blechdicke des übrigen Spannelements (3) und/oder des übrigen Stützelements (4) ist.

16. Montageelement (1) nach Anspruch 14 oder 15, bei dem das Federelement (17) lösbar auf einem von der Stirnseite (6) abgewandten freien Ende des Spannelements (3) und/oder des Stützelements (4) befestigt ist, vorzugsweise auf einem Schieber (10) des Spannelements (3), mit dem das Spannelement (3) über die Stirnseite (6) aus der Montageschiene (2) herausragt.

17. Montageelement (1) nach einem der Ansprüche 14 bis 16, bei dem das Federelement (17) an seinem von der Stirnseite (6) abgewandten Ende mindestens eine in der Längsrichtung (x) vorstehende Kontaktkralle (18) aufweist.

18. Montageelement (1) nach einem der Ansprüche 14 bis 17, bei dem das Federelement (17) ein Blechformteil ist, das an seinem von der Stirnseite (6) abgewandten Ende eine in der Längsrichtung (x) federelastische Blechlasche (20) mit mindestens einer Kerbe oder Ausnehmung (21) für die Aufnahme einer Positioniernoppe (101) aufweist, wobei die Blechlasche (20) vorzugsweise weiterhin mindestens eine in der Längsrichtung (x) vorstehende Kontaktkralle (18) aufweist.

19. Montageelement (1) nach einem der Ansprüche 14 bis 18, bei dem das Federelement (17) ein Blechformteil ist, das an gegenüberliegenden Seitenrändern jeweils eine U-förmige Umkantung (22) aufweist, die an ihrem von der Stirnseite (6) abgewandten Ende mindestens eine in der Längsrichtung (x) vorstehende weitere Kontaktkralle (19) aufweist.

20. Schaltschrankanordnung mit mindestens einem Montageelement (1) nach einem der vorangegangenen Ansprüche, das im Innern eines Schaltschrankgehäuses (100) entlang einer Außenwand (102) des Schaltschrankgehäuses (100) montiert ist.

21. Schaltschrankanordnung nach Anspruch 20, bei dem das Montageelement (1) zwischen einer Rückwand des Schaltschrankgehäuses (100) und einer eine Türöffnung (104) begrenzenden Profilierung (105) des Schaltschrankgehäuses (100) montiert ist, wobei das Stützelement (4) an der Rückwand abgestützt und das Spannelement (3) an der Profilierung (105) verspannt ist.

## Claims

1. Mounting element (1) for the interior fitting of a switch cabinet housing (100), wherein the mounting element (1) has a mounting rail (2) which has a clamping element (3) at a first of its opposite longitudinal ends (7) and a support element (4) at the second longitudinal end (8), **characterized in that** the clamping element (3) is connected to the mounting rail (2) via a linear guide and is adjustable in the longitudinal direction (x) of the mounting rail (2) with respect to the mounting rail (2) via a drive (5) acting between the mounting rail (2) and the clamping element (3).

2. Mounting element (1) according to claim 1, in which the drive (5) acts between an end side (6) of the mounting rail (2) at the first longitudinal end (7) and an actuating flange (9) of the clamping element (3).

3. Mounting element (1) according to claim 2, in which the clamping element (3) is arranged with the actuating flange (9) in the interior of the mounting rail (2) and projects out of the mounting rail (2) via the end side (6) with a slide (10) connected to the actuating flange (9).

4. Mounting element (1) according to one of the preceding claims, in which the drive (5) is a screw drive which extends with a threaded bolt (11) through an end side (6) of the mounting rail (2) at the first longitudinal end (7).

5. Mounting element (1) according to claim 4, in which the mounting rail (2) has a profile side (12) with at least one threadless aperture (13) for the threaded bolt (11) at the end side (6), wherein an actuating flange (9) of the clamping element (3) with an internal thread (13.1) for the threaded bolt (11) aligned with the aperture (13) is arranged on an inner side of the profile side (12) facing the interior of the mounting rail (2).

6. Mounting element (1) according to claim 5, in which the profile side (12) with the threadless aperture (13) and the actuating flange (9) with the internal thread (13.1) extend parallel to one another.

7. Mounting element (1) according to claim 5 or 6, in which the profile side (12) with the threadless aperture (13) and the actuating flange (9) with the internal thread (13.1) extend at an obtuse angle to a connecting profile side (14) of the mounting rail (2) extending parallel to the longitudinal direction (x), which connecting profile side connects two further profile sides (15) of the mounting rail (2) parallel to one another, which likewise extend parallel to the longitudinal direction (x) and perpendicular to the connecting profile side (14), to one another.

8. Mounting element (1) according to one of the preceding claims, in which the clamping element (3) is guided in the longitudinal direction (x) of the mounting rail (2) on the inner circumference and/or on the outer circumference of the mounting rail (2).

9. Mounting element (1) according to claim 8, in which the clamping element (3) is guided and supported in the longitudinal direction (x) of the mounting rail (2) along a contour which is C-shaped or U-shaped in cross section perpendicular to the longitudinal direction (x) on the inner circumference and/or on the outer circumference of the mounting rail (2), for which purpose the mounting rail (2) as C-shaped or U-shaped contour preferably has a connecting profile side (14) extending parallel to the longitudinal direction (x), which connecting profile side connects two further profile sides (15) of the mounting rail (2) parallel to one another, which likewise extend parallel to the longitudinal direction (x) and perpendicular to the connecting profile side (14), to one another.

10. Mounting element (1) according to claim 8 or 9, in which the clamping element (3) has at least one guide flange (16) extending parallel to the longitudinal direction (x) of the mounting rail (2), via which guide flange the clamping element (3) is guided and supported on the inner circumference of the mounting rail (2).

11. Mounting element (1) according to claim 10, in which the guide flange (16) is supported on the inner side of a connecting profile side (14) of the mounting rail (2) extending parallel to the longitudinal direction (x), which connecting profile side connects two further profile sides (15) of the mounting rail (2) parallel to one another, which further profile sides extend parallel to the longitudinal direction (x) and perpendicular to the connecting profile side (14), to one another.

12. Mounting element (1) according to claim 10 or 11, in which the guide flange (16) is arranged at an end of the clamping element (3) facing away from the end side (6) of the longitudinal end of the mounting rail (2) having the clamping element (3), wherein the guide flange (16) is preferably formed adjacent to and at an angle of more than 90° and less than 180° to an actuating flange (9) of the clamping element (3).

13. Mounting element (1) according to one of claims 7 to 11, in which the mounting rail (2) has a projecting profile side (12.1) at the end side (6), with which profile side the mounting rail (2) is supported on a slide (10) of the clamping element (3), with which slide the clamping element (3) projects out of the mounting rail (2) via the end side (6).

14. Mounting element (1) according to one of the preceding claims, in which the clamping element (3) and/or the support element (4) has a spring element (17) at its free end facing away from an end side (6) of the mounting rail (2), which spring element preferably has a spring stiffness which is at least smaller than a spring stiffness of other components of the clamping element (3) and/or a spring stiffness of the mounting rail (2).

15. Mounting element (1) according to claim 14, in which the spring element (17) and the remaining clamping element (3) and/or the remaining support element (4) are shaped sheet metal parts, wherein a sheet metal thickness of the spring element (17) is smaller than a sheet metal thickness of the remaining clamping element (3) and/or of the remaining support element (4).

16. Mounting element (1) according to claim 14 or 15, in which the spring element (17) is releasably fastened to a free end of the clamping element (3) and/or of the support element (4) facing away from the end side (6), preferably to a slide (10) of the clamping element (3), with which slide the clamping element (3) projects out of the mounting rail (2) via the end side (6).

17. Mounting element (1) according to one of claims 14 to 16, in which the spring element (17) has at least one contact claw (18) projecting in the longitudinal direction (x) at its end facing away from the end side (6).

18. Mounting element (1) according to one of claims 14 to 17, in which the spring element (17) is a shaped sheet metal part which has a sheet metal tab (20) which is resilient in the longitudinal direction (x) and has at least one notch or recess (21) for receiving a positioning knob (101) at its end facing away from the end side (6), wherein the sheet metal tab (20) preferably also has at least one contact claw (18) projecting in the longitudinal direction (x).

19. Mounting element (1) according to one of claims 14 to 18, in which the spring element (17) is a shaped sheet metal part which has a U-shaped edge (22) in each case at opposite side edges, which edge has at least one further contact claw (19) projecting in the longitudinal direction (x) at its end facing away from the end side (6).

20. Switch cabinet arrangement having at least one mounting element (1) according to one of the preceding claims, which is mounted in the interior of a switch cabinet housing (100) along an outer wall (102) of the switch cabinet housing (100).

21. Switch cabinet arrangement according to claim 20, in which the mounting element (1) is mounted between a rear wall of the switch cabinet housing (100) and a profiling (105) of the switch cabinet housing (100) delimiting a door opening (104), wherein the support element (4) is supported on the rear wall and the clamping element (3) is clamped on the profiling (105).

## Revendications

1. Élément de montage (1) pour l'aménagement intérieur d'un boîtier d'armoire électrique (100), l'élément de montage (1) comportant un rail de montage (2) qui présente, à une première de ses extrémités longitudinales opposées (7), un élément de serrage (3) et, à la deuxième extrémité longitudinale (8), un élément de support (4), **caractérisé en ce que** l'élément de serrage (3) est relié au rail de montage (2) par un guidage linéaire et est réglable dans la direction longitudinale (x) du rail de montage (2) par rapport à celui-ci, au moyen d'un entraînement (5) agissant entre le rail de montage (2) et l'élément de serrage (3).

2. Élément de montage (1) selon la revendication 1, dans lequel l'entraînement (5) agit entre une face frontale (6) du rail de montage (2) au niveau de la première extrémité longitudinale (7) et une bride d'actionnement (9) de l'élément de serrage (3).

3. Élément de montage (1) selon la revendication 2, dans lequel l'élément de serrage (3) est agencé avec la bride d'actionnement (9) à l'intérieur du rail de montage (2) et dépasse du rail de montage (2) par la face frontale (6) grâce à un coulisseau (10) relié à la bride d'actionnement (9).

4. Élément de montage (1) selon l'une des revendications précédentes, dans lequel l'entraînement (5) est un entraînement à vis qui s'étend avec un boulon fileté (11) à travers une face frontale (6) du rail de montage (2) au niveau de la première extrémité longitudinale (7).

5. Élément de montage (1) selon la revendication 4, dans lequel le rail de montage (2) présente, sur la face frontale (6), un côté profilé (12) avec au moins un passage non fileté (13) pour le boulon fileté (11), une bride d'actionnement (9) de l'élément de serrage (3) étant agencée sur un côté intérieur de la face profilée (12) tourné vers l'intérieur du rail de montage (2), avec un filetage intérieur (13.1) aligné sur le passage (13) pour le boulon fileté (11).

6. Élément de montage (1) selon la revendication 5, dans lequel le côté profilé (12) avec le passage non fileté (13) et la bride d'actionnement (9) avec le filetage intérieur (13.1) s'étendent parallèlement l'un à l'autre.

7. Élément de montage (1) selon la revendication 5 ou 6, dans lequel le côté profilé (12) avec le passage non fileté (13) et la bride d'actionnement (9) avec le filetage intérieur (13.1) s'étendent en suivant un angle obtus par rapport à un côté profilé de liaison (14) parallèlement à la direction longitudinale (x) du rail de montage (2), qui relie entre eux deux autres côtés profilés (15) parallèles entre eux du rail de montage (2), qui s'étendent également parallèlement à la direction longitudinale (x) et perpendiculairement au côté profilé de liaison (14).

8. Élément de montage (1) selon l'une des revendications précédentes, dans lequel l'élément de serrage (3) est guidé dans la direction longitudinale (x) du rail de montage (2) sur le pourtour intérieur et/ou sur le pourtour extérieur du rail de montage (2).

9. Élément de montage (1) selon la revendication 8, dans lequel l'élément de serrage (3) est guidé dans la direction longitudinale (x) du rail de montage (2) le long d'un contour en forme de C ou en forme de U dans la section transversale perpendiculaire à la direction longitudinale (x) sur le pourtour intérieur et/ou sur le pourtour extérieur du rail de montage (2), le rail de montage (2) présentant, en tant que contour en forme de C ou en forme de U, de préférence un côté de profilé de liaison (14) s'étendant parallèlement à la direction longitudinale (x), qui relie entre eux deux autres côtés de profilé (15) parallèles entre eux du rail de montage (2), qui s'étendent également parallèlement à la direction longitudinale (x) et perpendiculairement au côté profilé de liaison (14).

10. Élément de montage (1) selon la revendication 8 ou 9, dans lequel l'élément de serrage (3) présente au moins une bride de guidage (16) s'étendant parallèlement à la direction longitudinale (x) du rail de montage (2), par l'intermédiaire de laquelle l'élément de serrage (3) est guidé et soutenu sur le pourtour intérieur du rail de montage (2).

11. Élément de montage (1) selon la revendication 10, dans lequel la bride de guidage (16) est soutenue sur la face intérieure d'un côté de profilé de liaison (14) du rail de montage (2) s'étendant parallèlement à la direction longitudinale (x), qui relie entre eux les deux autres côtés de profilé (15) parallèles entre eux du rail de montage (2), qui s'étendent parallèlement à la direction longitudinale (x) et perpendiculairement au côté profilé de liaison (14).

12. Élément de montage (1) selon la revendication 10 ou 11, dans lequel la bride de guidage (16) est agencée sur une extrémité du rail de montage (2) opposée à la face frontale (6) de l'élément de serrage (3) du rail de montage (2), la bride de guidage (16) étant de préférence réalisée de manière adjacente à une bride d'actionnement (9) de l'élément de serrage (3) et formant avec celle-ci un angle supérieur à 90° et inférieur à 180°.

13. Élément de montage (1) selon l'une des revendications 7 à 11, dans lequel le rail de montage (2) présente, sur la face frontale (6), un côté profilé saillant (12.1) avec lequel le rail de montage (2) est soutenu sur un coulisseau (10) de l'élément de serrage (3) avec lequel l'élément de serrage (3) dépasse du rail de montage (2) par la face frontale (6).

14. Élément de montage (1) selon l'une des revendications précédentes, dans lequel l'élément de serrage (3) et/ou l'élément de support (4) présente, à son extrémité libre opposée à une face frontale (6) du rail de montage (2), un élément élastique (17) qui présente de préférence une rigidité élastique qui est au moins inférieure à une rigidité élastique des autres composants de l'élément de serrage (3) et/ou à une rigidité élastique du rail de montage (2).

15. Élément de montage (1) selon la revendication 14, dans lequel l'élément élastique (17) et l'élément de serrage restant (3) et/ou l'élément de support restant (4) sont des pièces moulées en tôle, l'épaisseur de tôle de l'élément élastique (17) étant inférieure à l'épaisseur de tôle de l'élément de serrage restant (3) et/ou de l'élément de support restant (4).

16. Élément de montage (1) selon la revendication 14 ou 15, dans lequel l'élément élastique (17) est fixé de manière amovible sur une extrémité libre de l'élément de serrage (3) et/ou de l'élément de support (4) opposée à la face frontale (6), de préférence sur un coulisseau (10) de l'élément de serrage (3), avec lequel l'élément de serrage (3) dépasse du rail de montage (2) par la face frontale (6).

17. Élément de montage (1) selon l'une des revendications 14 à 16, dans lequel l'élément élastique (17) comporte, à son extrémité opposée à la face frontale (6), au moins une griffe de contact (18) qui fait saillie dans la direction longitudinale (x).

18. Élément de montage (1) selon l'une des revendications 14 à 17, dans lequel l'élément élastique (17) est une pièce moulée en tôle qui présente, à son extrémité opposée à la face frontale (6), une languette en tôle (20) élastique dans le sens longitudinal (x) avec au moins une encoche ou un évidement (21) pour recevoir un tenon de positionnement (101), la languette en tôle (20) présentant de préférence au moins une griffe de contact (18) qui fait saillie dans la direction longitudinale (x).

19. Élément de montage (1) selon l'une des revendications 14 à 18, dans lequel l'élément élastique (17) est une pièce en tôle qui présente, sur des bords latéraux opposés, un rebord en forme de U (22) qui comporte, à son extrémité opposée à la face frontale (6) au moins une autre griffe de contact (19) qui fait saillie dans la direction longitudinale (x).

20. Dispositif pour armoire de commande avec au moins un élément de montage (1) selon l'une des revendications précédentes, qui est monté à l'intérieur d'un boîtier d'armoire de commande (100) le long d'une paroi extérieure (102) du boîtier d'armoire de commande (100).

21. Dispositif pour armoire de commande selon la revendication 20, dans lequel l'élément de montage (1) est monté entre une paroi arrière du boîtier d'armoire de commande (100) et un profilé (105) du boîtier d'armoire de commande (100) délimitant une ouverture de porte (104), l'élément de support (4) étant appuyé contre la paroi arrière et l'élément de serrage (3) étant serré contre le profilé (105).
